Europäisches Patentamt

European Patent Office

Office européen des brevets

(11) Veröffentlichungsnummer: **0 503 277 A1**

## (12) EUROPÄISCHE PATENTANMELDUNG

(21) Anmeldenummer: **92102114.3**

(22) Anmeldetag: **08.02.92**

(51) Int. Cl.5: **F02C 3/02**, F02C 5/12, F02C 5/04

(30) Priorität: **12.03.91 CH 735/91**

(43) Veröffentlichungstag der Anmeldung:
**16.09.92 Patentblatt 92/38**

(84) Benannte Vertragsstaaten:
**CH DE FR GB IT LI NL**

(71) Anmelder: **ASEA BROWN BOVERI AG**

**CH-5401 Baden(CH)**

(72) Erfinder: **Althaus, Rolf, Dr.**
**Kerbelring 24**
**CH-9230 Flawil(CH)**

(54) **Gasturbogruppe.**

(57) Bei einer Gasturbogruppe, welche im wesentlichen aus einem Verdichter (1), aus einer Hochdruckturbine (3), einer Niederdruckturbine (4), einem Generator (5) besteht, wird als Brennkammer eine Druckwellenmaschine (2) vorgesehen, welche zwischen dem Verdichter (1) und der Hochdruckturbine (3) plaziert wird. Die Druckwellenmaschine (2) beinhaltet einen Zellenrotor, dessen Rotorzellen den eigentlichen Verbrennungsraum bilden. Ueber Hilfsmittel werden die Rotorzellen fortlaufend mit einem Gemisch aus Verdichterluft und Brennstoff gefüllt, und danach zur Zündung gebracht. Ausgehend von einem festen Volumen der mit dem Gemisch gefüllten Rotorzellen entsteht nach der Zündung eine isocore Verbrennung, Aufgrund dieser Tatsache, dass die Verbrennung in einer geschlossenen Zelle bei konstantem Volumen stattfindet, kann der Wirkungsgrad der Anlage deutlich angehoben werden. Sowohl die Zuleitung der Verdichterluft (7) zur Druckwellenmaschine (2) als auch die Zuleitungen der Treibgase (8, 9) zu den spezifischen Turbinenteilen (3, 4) geschieht unmittelbar, ohne auf Hilfe eines Rohrsystems zurückgreifen zu müssen.

FIG.1

EP 0 503 277 A1

Technisches Gebiet

Die vorliegende Erfindung betrifft eine Gasturbogruppe gemäss Oberbegriff des Anspruchs 1. Sie betrifft auch ein Verfahren zum Betreiben einer solchen Gasturbogruppe.

Stand der Technik

Gasturbogruppen bestehen im wesentlichen aus einem Kompressor, einer Brennkammer, einer Turbine und einem Generator. Die im Kompressor verdichtete Luft wird nach konventioneller Technik in einer Gleichdruckbrennkammer kalorisch aufbereitet; das Heissgas beaufschlagt anschliessend die Turbine, welche ihrerseits einen Generator zur Stromerzeugung antreibt. Die Gleichdruckbrennkammer sind an sich voluminöse Gebilde, die mehrheitlich zwischen Kompressor und Turbine vertikal aufgerichtet wirken. Um die Kompaktheit der Turbogruppen zu erhöhen, ist schon vorgeschlagen worden, sogenannte Ringbrennkammer einzuführen. Diese funktionieren nach demselben Gleichdruckbrennprinzip, der Brennraum wird im Grunde genommen von der Vertikale in die Horizontale verlegt. Indem der horizontale Brennraum nun sowohl in die axiale Ebene des Kompressors als auch in diejenige der Turbine übergreift, gelingt es, eine gewisse vertikale und horizontale Kompaktheit zu erzielen. Freilich geht dies regelmässig auf Kosten der Stromführung hinsichtlich der verdichteten Luft vom Kompressor in die Brennkammer und der kalorisch aufbereiteten Gase von der Brennkammer in die Turbine: So muss das Arbeitsgas sowohl vom Verdichter in die Brennkammer als auch von der Brennkammer in die Turbine jeweils eng umgelenkt werden, was unweigerlich Verluste mit sich bringt, die schlussendlich auf den Wirkungsgrad drücken. Bei solchen Brennkammern muss ein grosses Augenmerk stets auf die Verhinderung von zu grossen NOx-Emissionen aus dem Verbrennungsprozess gelegt werden, was regelmässig nur durch diesbezüglich gezielte Massnahmen zu erreichen ist.

Darstellung der Erfindung

Hier will die Erfindung Abhilfe schaffen. Der Erfindung, wie sie in den Ansprüchen gekennzeichnet ist, liegt die Aufgabe zugrunde, eine Brennkanner vorzuschlagen, welche sich in kompakter Weise zwischen Kompressor und Turbine integrieren lässt. Eine weitere Aufgabe der Erfindung ist es, der Verbrennungsprozess in dieser Brennkammer so zu gestalten, dass er bei einem maximierten Wirkungsgrad und bei minimierten Schadstoff-Emissionen vonstatten geht.

Die wesentlichen Vorteile der Erfindung sind darin zu sehen, dass die ganze Turbogruppe eine sehr kompakte Einheit ist, insoweit als die Brennkammer in etwa die vertikale Ausdehnung des Kompressors resp. der Turbine einnimmt. Darüber hinaus nimmt diese Brennkammer eine axiale Ausdehnung ein, die nicht grösser als der Platzbedarf der Zu- und Abströmung konventioneller senkrecht angeordneter Brennkammer ausfällt. Die hier zwischen Kompressor und Turbine eingefügte Brennkammer ist eine Druckwellenmaschine, welche aus einem Zellenrad besteht, wobei die einzelnen Zellen im Verlauf ihrer drehenden Bewegung um eine Mittelachse, die vorzugsweise mit der Mittelachse von Verdichter und Turbine zusammenfällt, fortlaufend einen fest definierten Raum für eine Verbrennung eines Luft/Brennstoff-Gemisches bilden. Dies geschieht, nach obiger Auslegung im Sinne einer einzigen Mittelachse, indem sich der Zellenrad beispielsweise mit dem Rotor des Verdichters oder der Turbine dreht, wobei die an der Ausströmung der verdichteten Luft vom Verdichter vorbeidrehenden Zellen mit obengenanntem Brenngemisch (Brennstoff und Verdichterluft) fortlaufend gefüllt werden. Phasenverschoben zu dieser Stelle befindet sich im Gehäuse mindestens eine Ausströmung zu mindestens einer Turbine. Dazwischen erfolgt die Zündung des Gemisches in den einzelnen Zellen, worauf ein Heissgas entsteht, das bei Vorbeidrehen des Zellenrades an die genannte phasenverschobene Ausströmungsöffnung zu der Turbine strömt und die letztgenannte beaufschlägt. Es ist offensichtlich, dass dieser Ablauf auch zustande kommt, wenn das Zellenrad zwar nicht dreht, die Zuführung des Gemisches und die Abführung der Heissgase durch sich drehende Ein- und Ausströmungshilfsmittel, entsprechend der Anzahl Prozesszyklen pro Umlauf, geschieht. Indem die Zündung des Gemisches bei einem jeweilig abgeschlossen, volumenmässig fest definierten Raum geschieht, entsteht eine isocore Verbrennung, welche viel höhere Temperaturen, ähnlich wie bei einem Kolbenmotor, erlaubt. Aufgrund der Tatsache, dass die Verbrennung in einer geschlossenen Zelle, also, wie gesagt, bei konstantem Volumen stattfindet, fällt der Wirkungsgrad aus dieser Verbrennung höher als bei den klassischen Gleichdruckbrennkammern aus.

Ueberdies zeichnet sich der erfindungsgemässe Gegenstand durch eine ganze Reihe weiterer Vorteile aus:
Ein erster Vorteil ist darin zu sehen, dass die in den Zellen stattfindende Kompression zu einem intensiveren Vermischungsgrad der gemischbildenden Medien führt.

Des weiteren, da der zugemischte Brennstoff der Flamme abgewendet ist, d.h. die Vermischung von der Flammenstrahlung abgeschirmt ist, kann mit einem sehr guten Premix gerechnet werden, und weil ein verdampfter Brennstoff während des nachfolgenden Prozesses kaum noch Flammenstrahlung absorbiert, ist die Gefahr einer Frühzündung des Gemisches mithin unterbunden.

Ferner ist ein weiterer Vorteil der Erfindung darin zu sehen, dass das Zellenrad keine speziell vorzusehenden Kühlungsvorkehrung benötigt, wie dies regelmässig bei Gleichdruckbrennkammer der Fall ist, denn die fortwährende Aufnahme von verdichteter Luft kühlt fortlaufend die Zellen, in welchen vorgängig die Verbrennung stattgefunden hat.

Zuletzt sei noch auf einen weiteren Vorteil der Erfindung hingewiesen, der sich auch aus der Konfiguration der Ein- und Ausströmungen zum resp. vom Zellenrad ergibt: Verdichterseitig befindet sich die Einströmung zu den Zellen, turbinenseitig befinden sich die Zuströmung zu der Turbine. Wenn von Zuströmungen die Rede ist, so deshalb, weil es mit dem Erfindungsgegenstand ohne weiteres möglich ist, nebst einer Hochdruck- auch eine Niederdruck-Beaufschlagung der Turbine vorzusehen. Allgemein gültig lässt sich zum letztgenannten Punkt sagen, dass die Turbogruppe ohne ein weitverzweigtes Rohrsystem auskommt, wodurch sich viele konstruktive Probleme gar nicht stellen.

Vorteilhafte und zweckmässige Weiterbildungen der erfindungsgemässen Aufgabenlösung sind in den weiteren Ansprüchen gekennzeichnet.

Im folgenden wird anhand der Zeichnung Ausführungsbeispiele der Erfindung erläutert. Alle für das unmittelbare Verständnis der Erfindung nicht erforderlichen Elemente sind fortgelassen. Die Strömungsrichtung der verschiedenen Medien ist mit Pfeilen angegeben. In den verschiedenen Figuren sind gleiche Elemente jeweils mit den gleichen Bezugszeichen versehen.

Kurze Beschreibung der Figuren

Es zeigt:

Fig. 1    eine schematische Darstellung der Gasturbogruppe mit integrierter Druckwellenmaschine als Brennkammer;

Fig. 2    eine schematische Abwicklung des Zellenrades, nachfolgend auch Zellenrotor genannt, der Verlauf des Druckwellenprozess und die Verbrennung bei konstantem Volumen ersichtlich ist;

Fig. 3    einen axialen Schnitt durch die Gasturbogruppe;

Fig. 4    eine Steuerscheibe stromab des Verdichters und stromauf der Druckwellenmaschine und

Fig 5    eine Steuerscheibe stromab der Druckwellenmaschine und stromauf der Turbine.

Wege zur Ausführung der Erfindung, gewerbliche Verwertbarkeit

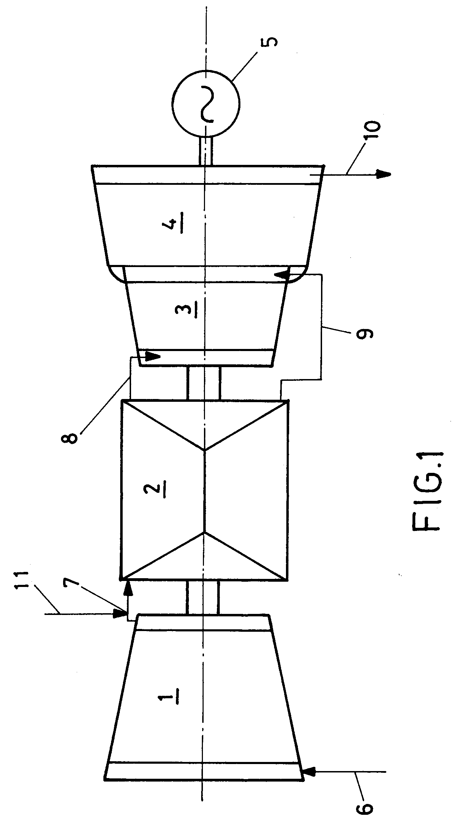

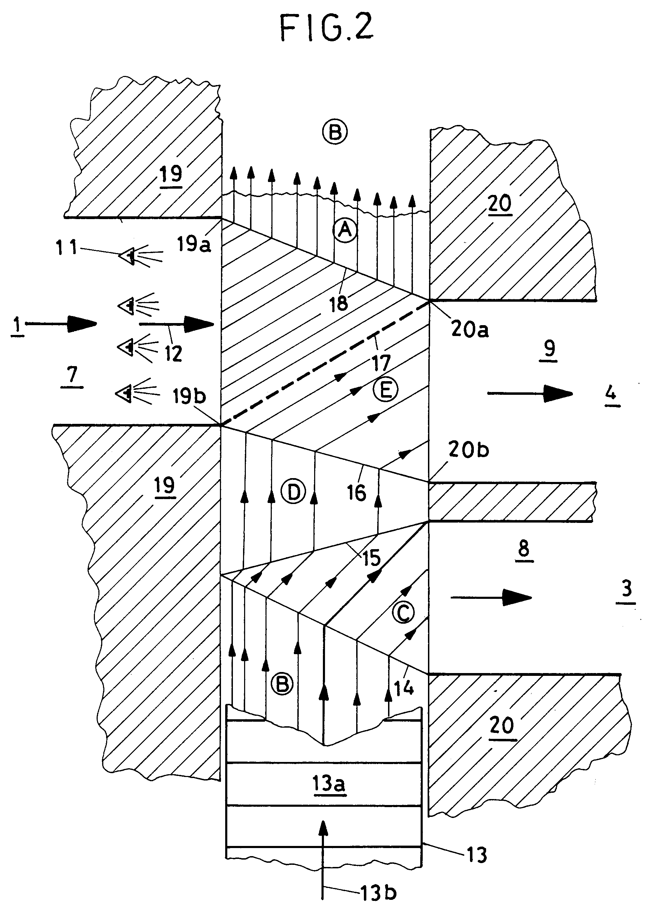

Fig. 1 zeigt eine schematische Darstellung der Gasturbogruppe, worin eine Druckwellenmaschine integriert ist. Die Gasturbogruppe besteht aus einem Verdichter 1, einer Hochdruckturbine 3, einer Niederdruckturbine 4, einem mit der Turbogruppe verbundenen Generator 5 zur Stromerzeugung. Als Brennkammer wirkt die Druckwellenmaschine 2, welche zwischen Verdichter 1 und Hochdruckturbine 3 plaziert ist. Die angesaugte Luft 6 wird im Verdichter 1 zu Verdichterluft überführt. Die Verdichterluft mündet vorerst in einen Vormischkanal 7, in welchem der Luft ein Brennstoff 11 zugemischt wird, bevor das so entstandene Gemisch 12 in die Druckwellenmaschine 2 strömt. In der Druckwellenmaschine 2 läuft ein Prozess ab, wie er unter Fig. 2 noch detailliert zur Sprache kommen wird, aus welchem ein Hochdrucktreibgas und ein Niederdrucktreibgas entstehen: Während das Hochdrucktreibgas über eine Hochdrucktreibgasleitung 8 die Hochdruckturbine 3 beaufschlagt, wird der restliche Teil des teilexpandierten Heissgases als Niederdrucktreibgas über eine vorzugsweise unabhängige Niederdrucktreibgasleitung 9 zur Niederdruckturbine 4 geleitet, wobei die letztgenannte eine Niederdruckstufe der ganzen Turbine sein kann. Die entspannten Treibgase strömen dann als Abgase 10 von letztbeaufschlagter Turbinenstufe ab, wobei das darin noch enthaltene Potential, insbesondere was die Kalorik betrifft, einer Frischdampfaufbereitung zur Betreibung einer der Gasturbogruppe nachgeschalteten Dampfturbine im Sinne einer Kombianlage mit oder ohne Zusatzfeuerung zugänglich gemacht werden kann.

Fig. 2 zeigt eine schematische Abwicklung des Zellenrotors 13 der Druckwellenmaschine 2, soweit sie zur Erklärung des Druckwellen- sowie des isocoren Verbrennungsprozesses vonnöten ist, wobei vorliegend ausgegangen wird, dass sich der Zellenrotor 13 dreht. Vom Zellenrotor 13 sind nur einzelne Zellen 13a dargestellt bzw. ersichtlich, wobei diese, vorliegend, rechtwinklig zur Drehrichtung 13b des Zellenrotors 13 verlaufen. Selbstverständlich können diese Zellen auch schräg zur Drehrichtung des Zellenrotors angeordnet sein, wie dies beispielsweise in EP-B1-0 212 181 beschrieben wird, wobei, bei erläuterndem Bedarf in diesem Zusammenhang, auf die Beschreibung dieser Druckschrift verwiesen wird. Der Zellenrotor 13 selbst läuft mit sehr kleinem Spiel in einem nur andeutungsweise gezeigten Gehäuse 19, 20, wobei die beiden Rotorstirnseiten des Gehäuses 19, 20 mit verschiedenen Kanälen 7, 8, 9 durchsetzt sind. In Fig. 2 ist schematisch ein einzelner Prozess gezeigt; es lassen sich ohne weiteres mehrere Prozesse pro Umdrehung des Zellenrotors 13 vorsehen: Um eine gleichförmige Temperaturverteilung des Zellenrotors 13 zu erzielen, werden vorzugsweise mindestens zwei symmetrisch angeordnete Prozesse vorgesehen. Im folgenden wird demnach lediglich den einen gezeigten Zyklusteil des Prozesses beschrieben. Die vom Verdichter 1 kommende Verdichterluft erfährt im Vormischkanal 7 eine Brennstoffzumischung 11, bevor dieses Brennstoff/Luft-Gemisch 12 in den Wirkungsbereich der Rotorzellen 13a gelangt. Dieses Gemisch 12 tritt also durch den Ausgang des Vormischkanals 7 in die Zellen 13a ein. Dabei nehmen die am Vormischkanal 7 vorbeidrehenden Zellen 13a eine bestimmte Menge des dort anfallenden Gemisches 12, aus Verdichterluft und Brennstoff zusammengesetzt, auf. Die Füllung der Zellen 13a, im Sinne einer konstanten Menge, wird durch die Schliesskante 19a des Vormischkanals 7 im Gehäuse 19 bestimmt. Die Verbindung zwischen der letztgenannten Schliesskante 19a und der anderen Schliesskante 20a des Gehäuses 20 stellt der Verlauf der Stosswelle 18 dar, die die Grenze der Kompression A definiert. Die Zündung des in der Zellen 13a zu einem konstanten Volumen eingefangenen Gemisches erfolgt anschliessend, entlang des durch den Gehäusekörper 19, 20 stirnseitig abgeschlossenen Zellenrotors 13, und kann vorzugsweise mit einer Reihe nicht gezeigten Zündbügeln erfolgen. Selbsverständlich können auch andere Zündvorkehrungen vorgesehen werden. Das Treibgas, das in jeder Zelle 13a bei konstantem Volumen aufgrund des inizierten Verbrennungsprozess B entsteht, gelangt im darauffolgenden Zyklusteil durch eine Hochdrucktreibgasleitung 8 in die Hochdruckturbine 3 (Vgl. hierzu Fig. 1). Diese Hochdruckturbine wird mit einem Teil der ganzen anfallenden Treibgasmenge zwischen den beiden Expansionwellen 14 und 15, entsprechend dem Hochdruckbereich C, beaufschlagt. Bis zur Oeffnungskanten 19b und 20b im entsprechenden Gehäuseteil expandiert das Treibgas zwischen den Expansionswellen 15 und 16 von einem Druck p2 auf einen Druck p1, wie dies im Expansionsbereich D anhand der lichter werdenden Strömungslinien versinnbildlicht wird. Dieses teilentspannte Treibgas strömt sodann durch die Niederdrucktreibgasleitung 9 zur Niederdruckturbine 4 (Vgl. Fig. 1). Dieser Niederdruckbereich E ist durch die Mediengrenze 17 abgegrenzt, die von der Oeffnungskante 19b des Vormischkanals 7 zur Schliesskante 20a der Niederdrucktreibgasleitung 9 verläuft. Anschliessend fängt eine neue Phase an, indem, analog dem Gesagten, die vorbeidrehenden Zellen 13a über den Vormischkanal 7 mit dem Brennstoff/Luft-Gemisch 12 gefüllt werden. Die einzelnen Zellen 13a stellen demnach an sich jeweils eine durch ein konstantes Volumen charakterisierte "Mini-Brennkammer" dar, die vorzugsweise so auszulegen ist, dass die in ihr erzeugten Treibgase bei maximaler Last der Gasturbogruppe die höchstzulässige Grenztemperatur der Beschaufelung am Eintritt der Hochdruckturbine nicht überschreitet. Vorzugsweise ist eine Schaltung oder Vorkehrungen vorzusehen, welche erlauben, dass das teilentspannte und entsprechend abgekühlte Treibgas nach der Hochdruckturbine nach Bedarf dem Treibgas zur Niederdruckturbine beigemischt werden kann, und zwar immer derart, dass das daraus entstehende, kalorisch veredelte Treibgasgemisch wiederum gerade die Grenztemperatur der ersten Stufe der Niederdruckturbine nicht überschreitet. Solche Schaltung oder Vorkehrungen hierzu sind in Fig. 2 nicht dargestellt. Weist die Gasturbine allenfalls noch einen Mitteldruckteil auf, so erfolgt die Beaufschlagung des jeweiligen Gasturbinenteils in analoger Weise, gemäss den vorangegangenen Ausführungen. Finaler Zweck solcher Auslegungen wird immer sein, für die Gasturbine eine grobe Annäherung an die isotherme Expansion des Carnotschen Kreisprozesses zu erreichen.

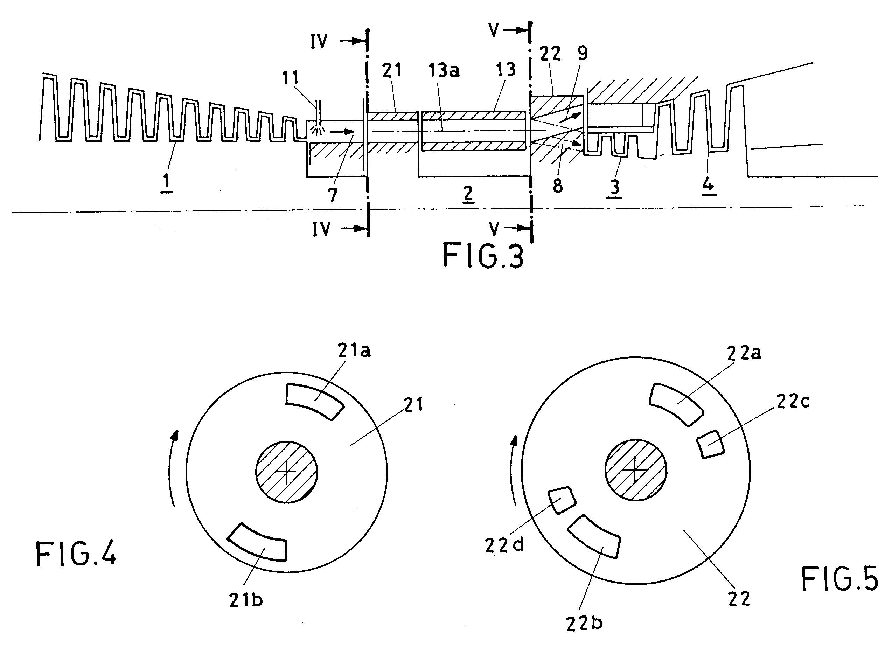

Fig. 3 zeigt einen Schnitt durch die Gasturbogruppe. Ersichtlich sind der Verdichter 1, der Vormischkanal 7 samt Brennstoffzuführung 11, der Zellenrotor 13 mit einer Zelle 13 und stromab des Zellenrotors 13 die Hochdruckturbine 3 und die Niederdruckturbine 4. Die hier dargestellte Konfiguration zeigt, im Gegensatz zur Ausgangslage nach Fig. 2, die Ausführung eines festen, nicht drehbaren Zellenrotors 13. Die Zuleitung der Verdichterluft zu den einzelnen Zellen 13a wird stromab des Verdichters 1 durch eine sich drehende Steuerscheibe 21 übernommen, welche eine Anzahl Durchbrüche, die in Strömungsrichtung Teil der Vormischkanäle 7 sind, aufweist, entsprechend der Anzahl Prozesszyklen, wie dies unter Fig. 2 bereits zur Erläuterung gekommen ist. Stromab des Zellenrotors 13 wirkt eine weitere sich drehende Steuerscheibe 22, welche ebenfalls eine Anzahl Durchbrüche aufweist, durch welche das Treibgas zu der jeweiligen Turbine strömt. Es ist offensichtlich, dass diese Steuerscheibe 22 pro Prozesszyklus mehrere Durchbrüche aufweisen muss, entsprechend der nachgeschalteten Turbinen. Es ist ferner offensichtlich, dass die Durchbrüche, welche ein Teil der Hochdrucktreibgasleitung 8 resp. Niederdrucktreibgasleitung 9 sind, so dimensioniert sein müssen, dass die Beaufschlagung der jeweiligen Turbine treibgasmengenmässig erfüllt wird. Die Figur zeigt des weiteren, wie die Beaufschlagung der einzelnen Turbine ohne ein Rohrsystem auskommt. Die Durchbrüche in der Steuerscheibe 22 weisen eine gegeneinander gerichtete Strömungsinklination auf, wobei jeder Durchbruch in die Strömungseinleitung zu der jeweiligen Turbine kommuniziert. Wie bereits vorne zur Ausführung gelangte, ist es ohne weiteres möglich, die Steuerscheiben fest vorzusehen: In einem solchen Fall würde sich der Zellenrotor 13 drehen,wie dies unter Fig. 2 beschrieben wird, wobei sich am druckwellenmässigen und verbrennungstechnischen Prozess selbst nichts ändert

Fig. 4 zeigt die stromauf der Druckwellenmaschine wirksame Steuerscheibe 21, worin zwei Durchbrüche 21a, 21b ersichtlich sind, entsprechend der Tatsache, dass in diesem Fall pro Abwicklung des Zellenrotors 13 zwei Prozesszyklen ablaufen. Die Dimensionierung der Durchbrüche richtet sich nach der pro Zelle 13a benötigter Gasmenge, wobei selbstverständlich eine Abhängigkeit zu den übrigen strömungsspezifischen Parametern, so unter anderen bezüglich Umlaufgeschwindigkeit des Zellenrotors, Strömungsmenge an Verdichterluft und an Treibgase, etc., besteht.

Fig. 5 zeigt die andere Steuerscheibe 22, welche stromab der Druckwellenmaschine wirkt. Die Durchbrüche 22a und 22b weisen zu den Hochdrucktreibgasleitungen 8, die Durchbrüche 22c und 22d demnach zu den Niederdrucktreibgasleitungen 9. Die Wirkungsweise ist dieselbe wie oben beschrieben.

## Patentansprüche

1. Gasturbogruppe im wesentlichen bestehend aus mindestens einem Verdichter, mindestens einer Brennkammer, mindestens einer Turbine und mindestens einem Generator, dadurch gekennzeichnet, dass die Brennkammer eine zwischen Verdichter (1) und Turbine (3, 4) plazierte Druckwellenmaschine (2) ist, dass die Druckwellenmaschine (2) im wesentlichen aus einem Zellenrotor (13) mit einer Anzahl in Umfangsrichtung angeordneten Rotorzellen (13a), einem den Zellenrotor (13) umfangsmässig und stirnseitig umschliessenden Gehäuse (19, 20) besteht, dass das Gehäuse (19, 20) über mindestens einen Kanal (7) mit dem Verdichter (1) und über mindestens einen anderen Kanal (8, 9) mit der Turbine (3, 4) verbunden ist.

2. Gasturbogruppe nach Anspruch 1, dadurch gekennzeichnet, dass der Zellenrotor (13) um eine gemeinsame Achse des Verdichters (1) und/oder der Turbine (3, 4) drehbar ist, dass verdichterseitig und turbinenseitig an beiden Enden des Zellenrotors (13) je eine feste Steuerscheibe plaziert ist, dass die Steuerscheiben in der Ebene der Rotorzellen (13a) Durchbrüche aufweisen.

3. Gasturbogruppe nach Anspruch 1, dadurch gekennzeichnet, dass der Zellenrotor (13) fest ist, dass verdichterseitig und turbinenseitig an beiden Enden des Zellenrotors (13) je eine drehbare Steuerscheibe (21, 22) plaziert ist, dass die Steuerscheiben (21, 22) in der Ebene der Rotorzellen (13a) Durchbrüche (21a, 21b; 22a, 22b, 22c, 22d) aufweisen.

4. Gasturbogruppe nach den Ansprüchen 2 und 3, dadurch gekennzeichnet, dass die Anzahl der Durchbrüche bei fester oder drehbarer Steuerscheibe verdichterseitig mit der Anzahl der Prozesszyklen pro Zellenrotorabwicklung, turbinenseitig mit der Anzahl der Prozesszyklen multipliziert mit der Anzahl der nachgeschalteten Turbinen übereinstimmt.

5. Verfahren zum Betrieb einer Gasturbogruppe nach Anspruch 1, dadurch gekennzeichnet, dass die im Verdichter (1) aufbereitete Luft vor Eintritt in die Druckwellenmaschine (2) mit einem Brennstoff (11) gemischt wird, dass das Brennstoff/Luft-Gemisch (12) in die Rotorzellen (13a) eingeleitet wird, dass das Brennstoff/Luft-Gemisch (12) im Zustand eines durch die Grösse der einzelnen Rotorzellen 13a) indizierten konstanten Volumen zur Zündung gebracht wird, und dass die Turbine (3, 4) durch ein aus der Verbrennung in den Rotorzellen (13a) sich bildendes Treibgas (8, 9) beaufschlagt wird.

EP 0 503 277 A1

FIG.1

# FIG.2

EP 0 503 277 A1

IV → V →

11  21  13a  13  22  9

1

7  2  8  3  4

IV →  V →

**FIG.3**

21a

21

FIG.4

21b

22a

22c

22

22d

22b

FIG.5

Europäisches
Patentamt

**EUROPÄISCHER RECHERCHENBERICHT**

Nummer der Anmeldung

EP    92 10 2114

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-A-850 087 (MAN) <br> * das ganze Dokument * <br> --- | 1,3-5 | F02C3/02 <br> F02C5/12 <br> F02C5/04 |
| X | US-A-2 705 867 (LEWIS) <br> * das ganze Dokument * <br> --- | 1,2,4,5 | |
| Y | CH-A-251 279 (BBC) <br> * das ganze Dokument * <br> --- | 1-5 | |
| Y | WO-A-8 002 444 (LE MEUR) <br> * das ganze Dokument * <br> --- | 1-5 | |
| A | EP-A-0 085 119 (GRAF VON INGELHEIM GEN. ECHTER VON U. ZU MESPELBRUNN) <br> * Seite 1, Zeile 1 - Seite 7, Zeile 1; Abbildungen 1-3B,5 * <br> --- | 1,2,4,5 | |
| A,O | EP-A-0 212 181 (BBC) <br> --- | | |
| A | US-A-2 937 498 (SCHMIDT) <br> --- | | **RECHERCHIERTE SACHGEBIETE (Int. Cl.5 )** |
| A | CH-A-95 548 (BOERNER) <br><br> ----- | | F02C <br> F23R |

Der vorliegende Recherchenbericht wurde für alle Patentansprüche erstellt

| Recherchenort | Abschlußdatum der Recherche | Prüfer |
|---|---|---|
| DEN HAAG | 02 JUNI 1992 | IVERUS D. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.........................................................
& : Mitglied der gleichen Patentfamilie, übereinstimmendes
    Dokument

EPO FORM 1503 03.82 (P0403)